# EUROPEAN PATENT APPLICATION

(11) **EP 4 317 859 A1**
(43) Date of publication of application: **07.02.2024**
(21) Application number: 22188176.6
(22) Date of filing: 01.08.2022
(51) Int. Cl.: F25B 41/40, B60H 1/00, B60H 1/32, B60H 1/22

(54) **REFRIGERANT MODULE FOR THERMAL MANAGEMENT SYSTEM**

(71) Applicant: VALEO SYSTEMES THERMIQUES, 78320 Le Mesnil Saint-Denis (FR)
(72) Inventor: THOTA, Lohith Sriram Pavan, 600130 Chennai (IN); FIENE, Andreas, 96476 Bad Rodach (DE)
(74) Representative: Valeo Systèmes Thermiques

(57) **Abstract**

The invention is about a refrigerant module for a thermal management system, comprising a refrigerant unit, called first refrigerant unit (RU-1) comprising channels for distributing a refrigerant fluid in said thermal management system, the refrigerant module (1) comprising a compressor (100) provided with a suction port (104) and a discharge port (105), wherein the compressor (100) and the first refrigerant unit (RU-1) are directly fluidly connected.

## Description

This disclosure relates to a refrigerant module for a thermal management system.

### Background Art

The cooling and/or heating circuits include thermal management components, such as pumps, valves, heat exchangers, and components for pressure and temperature control. Also provided are components, such as conduits, which guide the fluid and fluidically connect the thermal management components to each other.

The development of electric vehicles has increased the need for optimized air conditioning and/or heat pump systems with simplified and economical manufacturing processes while creating a demand for space-saving systems.

### Summary

This disclosure improves the situation.

It is proposed a refrigerant module for a thermal management system, comprising a refrigerant unit, called first refrigerant unit, comprising channels for distributing a refrigerant fluid in said thermal management system, the refrigerant module comprising a compressor provided with a suction port and a discharge port, wherein the compressor and the first refrigerant unit are directly fluidly connected.

Thanks to this configuration, the refrigerant module can be handled as one piece, which makes its manipulation easy. Also, thanks to this arrangement, the refrigerant module is compact, which makes the associated thermal management system well suited for electric vehicles.

In another aspect, the first refrigerant unit is directly connected to the suction port of the compressor.

In another aspect, the first refrigerant unit is directly connected to the discharge port of the compressor.

In another aspect, the compressor is fixed to the first refrigerant unit.

In another aspect, the refrigerant module comprises another refrigerant unit, called second refrigerant unit, the second refrigerant unit comprising distributing the refrigerant fluid in said thermal management system, the first refrigerant unit and the second refrigerant unit being fixed together, wherein the compressor and the second refrigerant unit are directly fluidly connected.

In another aspect, the first refrigerant unit is directly connected to the discharge port and the second refrigerant unit is directly connected to the suction port.

In another aspect, the first refrigerant unit and the second refrigerant unit are directly fluidly connected to each other.

In another aspect, the second refrigerant unit is disposed inclined relatively to the first refrigerant unit, the angle between the first refrigerant unit and the second refrigerant unit being comprised in a range of values of 45° to 110°.

In another aspect, the first refrigerant unit is perpendicular to the second refrigerant unit.

In another aspect, the compressor is fixed to both the first refrigerant unit and the second refrigerant unit.

In another aspect, the second refrigerant unit comprises at least one bracket to receive the compressor.

In another aspect, said at least one bracket comprises a decoupling element.

In another aspect, the refrigerant module comprises two brackets.

In another aspect, the second refrigerant unit and each bracket are screwed or brazed together.

The invention also relates to a thermal management system comprising a refrigerant module as described above.

In another aspect, the thermal management system further comprises a fluid source in fluid communication with and attached to the refrigerant module, the fluid source including at least one of a condenser, a chiller, a receiver-drier, the compressor or a coolant container.

### Brief Description of Drawings

Other features, details and advantages will be shown in the following detailed description and on the figures, on which:
**Fig. 1**

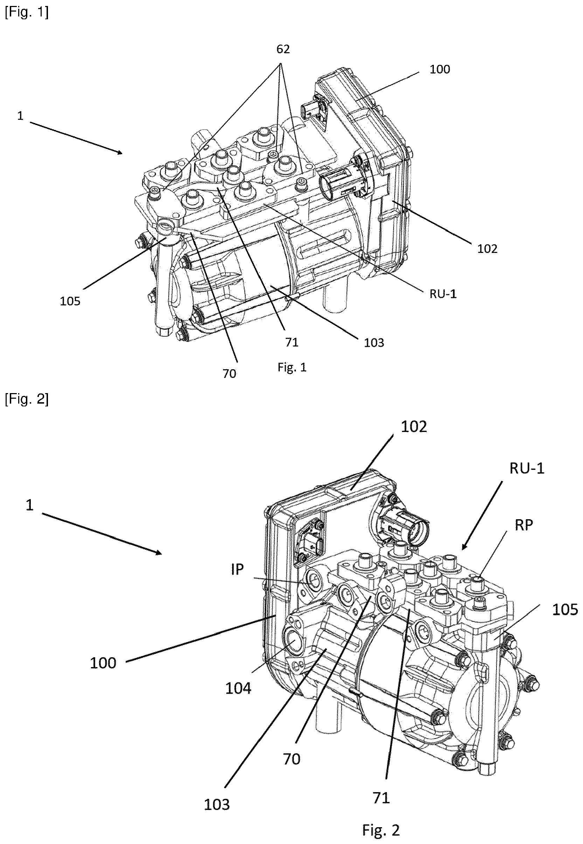

   [Fig. 1] is a perspective view of a refrigerant module according to an embodiment of the present disclosure.
**Fig. 2**
   [Fig. 2] is another perspective view of a refrigerant module of figure 1.
**Fig. 3**

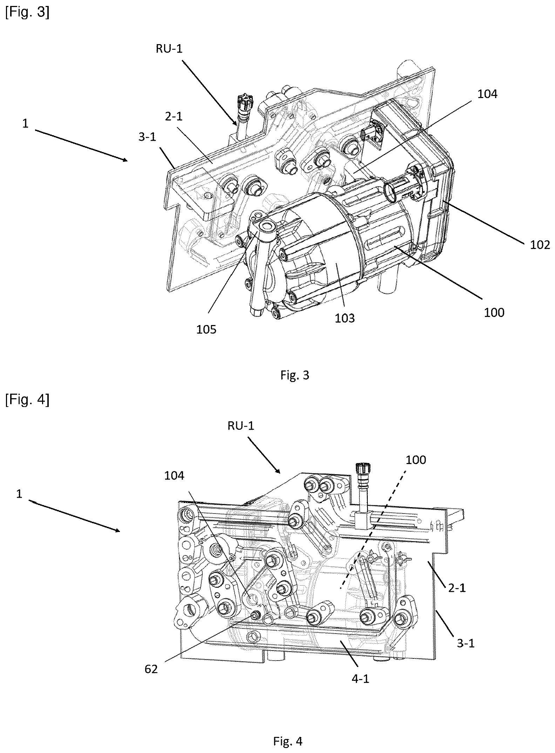

   [Fig. 3] is a perspective view of a refrigerant module according to an alternative of the present disclosure.
**Fig. 4**
   [Fig. 4] is another perspective view of a refrigerant module of figure 3.
**Fig. 5**

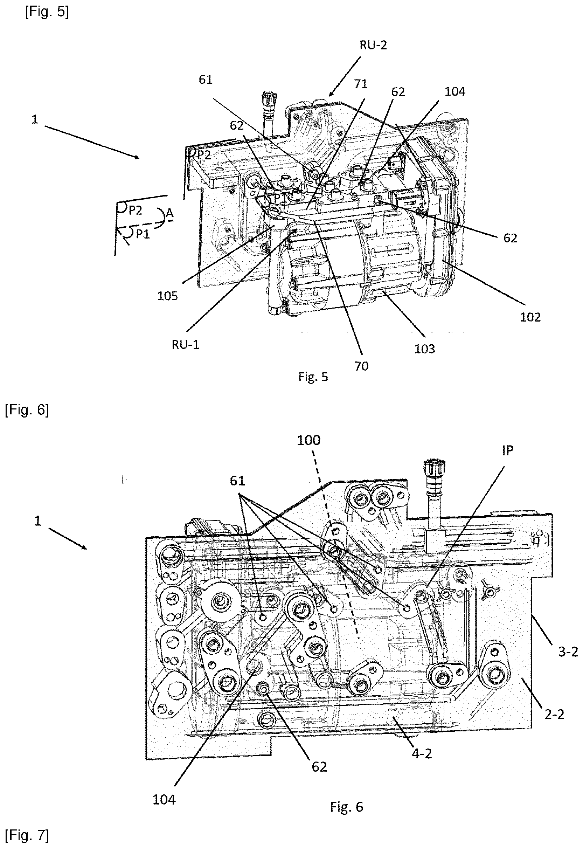

   [Fig. 5] is a perspective view of a refrigerant module according to another embodiment of the present disclosure.
**Fig. 6**
   [Fig. 6] is another perspective view of a refrigerant module of figure 5.
**Fig. 7**
   [Fig. 7] is perspective view of a refrigerant module according to another embodiment of the present disclosure (a refrigerant unit not being shown).
**Fig. 8**

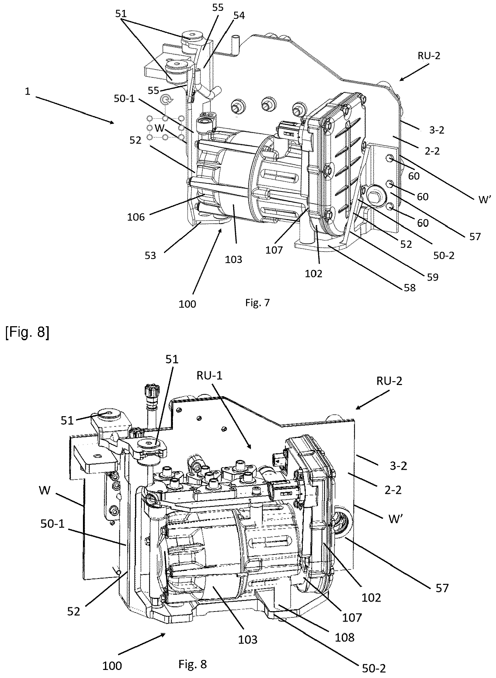

   [Fig. 8] is another perspective view of an alternative of the refrigerant module of figure 7 (the refrigerant units being shown).

### Description of Embodiments

The present invention relates to a refrigerant module for a thermal management system of a vehicle, referred to as 1 in the figures. The vehicle is preferably an electric vehicle. The thermal management system can be an air conditioning system and/or a heat pump used for the comfort of the passengers of the vehicle or can be dedicated to the thermal management of a given component of the vehicle, like a battery of the electric vehicle.

The refrigerant module comprises a refrigerant unit RU-1, also called first refrigerant unit, as well as a compressor 100.

The compressor 100 is preferably an electric driven compressor. The compressor 100 comprises a body 101 with a parallelepiped part 102 and a cylindrical part 103, even though the invention is not limited to this shape.

The cylindrical part 103 comprises an inlet of a refrigerant fluid in the compressor, called suction port,104, and an outlet of the refrigerant fluid, called discharge port, 105.

The cylindrical part 103 extends from a first end, called free end, 106, to a second end, 107. The second end 107 is fixed to the parallelepiped part 102. The second end 107 is provided with legs 108.

The first embodiment is now described with reference to figures 1 to 4.

As can be seen from figures 1 and 2, the first refrigerant unit RU-1 comprises a supporting hub 70 provided with channels 71 ensuring distribution of the refrigerant fluid in components of the thermal management system, like the compressor, heat exchangers, such as an evaporator and/or a chiller and/or a condenser and/or PT (pressure temperature) sensors and/or valves and/or AC (air conditioning) lines. In figure 1, are indicated refrigerant interface ports IP, and refrigerant ports RP (for connecting a valve for instance).

Advantageously, the hub 70 of the first refrigerant plate RU-1 is built with two channel plates and a back plate disposed between the two channel plates. This configuration can let cross the refrigerant because the channels are on different sides of the back plate.

Different components of the thermal management system can be attached to the refrigerant unit RU-1 like at least: a condenser and/or a water condenser and/or a heat exchanger (evaporator and/or chiller) and/or PT (pressure temperature) sensors, and/or valves and/or AC (air conditioning) lines.

As can also be seen from figures 1 and 2, the first refrigerant unit RU-1 preferably extends horizontally in a service position, i.e., in a position in which the refrigerant module 1 works.

Alternatively, as can be seen from figures 3 and 4, the first refrigerant unit RU-1 comprises two connected plates, a first plate 2-1 and a second plate 3-1, the two plates facing each other and fixed together. The first plate 2-1 comprises tracks and can be called refrigerant plate. The second plate 3-1 is essentially flat and can be called back plate. The refrigerant plate 2-1 and the back plate 3-1 are sealed together to delimit a closed space to form the distributing channels 4-1 thanks to the tracks.

The channels 4-1 ensure distribution of the refrigerant fluid in components of the thermal management system, like the compressor, heat exchangers, such as an evaporator and/or a chiller and/or a condenser and/or PT (pressure temperature) sensors and/or valves and/or AC (air conditioning) lines.

Different components of the thermal management system can be attached to the refrigerant unit RU-1 and/or the second refrigerant unit RU-2 like at least: a condenser and/or a water condenser and/or a heat exchanger (evaporator and/or chiller) and/or PT (pressure temperature) sensors, and/or valves and/or AC (air conditioning) lines.

As can also be seen from figures 3 and 4, the first refrigerant unit RU-1 preferably extends vertically in the service position.

The compressor 100 and the first refrigerant unit RU-1 are directly fluidly connected together.

In other words, the refrigerant fluid directly flows from the refrigerant unit RU-1 to the compressor 100 and/or directly flows from the compressor 100 to the first refrigerant unit RU-2.

In the alternative of figures 1 and 2, the first refrigerant unit RU-1 is directly connected to the discharge port 105 of the compressor 100 thanks to its horizontal position.

As can be seen from figures 1 and 2, the discharge port 105 of the compressor 100 is mounted directly to the hub 70 of the first refrigerant unit RU-1 such that the fluid directly flows from the compressor 100 to the first refrigerant unit RU-1.

In the alternative of figures 3 and 4, the first refrigerant unit RU-1 is directly connected to the suction port 104 of the compressor 100 thanks to its vertical position.

The direct connection between the compressor 100 and the first refrigerant unit RU-1 ensures high compactness of the thermal management system, elimination of at least some of AC lines, reduction of the number of AC connectivity as well as a reduction of cost.

The invention is not limited to the described alternatives. In particular, a two-plate refrigerant unit as in the alternative of figures 3 and 4 can be connected to the discharge port of the compressor. Similarly, the hub of the first refrigerant unit of figures 1 and 2 can be connected to the suction port of the compressor.

The second embodiment is now described with reference to figures 5 and 6.

As can be seen from figures 5 and 6, the refrigerant module 1 comprises a first refrigerant unit RU-1 and a second refrigerant unit RU-2.

The first refrigerant unit RU-1 is similar to the first refrigerant unit RU-1 of the alternative of figures 1 and 2. The first refrigerant unit RU-1 comprises a supporting hub 70 on which are mounted channels 71 ensuring distribution of the refrigerant fluid in components of the thermal management system, like the compressor, heat exchangers, such as an evaporator and/or a chiller and/or a condenser and/or PT (pressure temperature) sensors and/or valves and/or AC (air conditioning) lines.

The second refrigerant unit RU-2 is similar to the first refrigerant unit RU-1 of figures 3 and 4. The second refrigerant unit RU-2 comprises two connected plates, a first plate 2-2 and a second plate 3-2, the two plates facing each other and fixed together. The first plate 2-2 comprises tracks and can be called refrigerant plate. The second plate 3-2 is essentially flat and can be called back plate. The refrigerant plate 2-2 and the back plate 3-2 are sealed together to delimit a closed space to form the distributing channels 4-2 thanks to the tracks.

Different components of the thermal management system can be attached to the refrigerant unit RU-1 and/or the second refrigerant unit RU-2 like at least: a condenser and/or a water condenser and/or a heat exchanger (evaporator and/or chiller) and/or PT (pressure temperature) sensors, and/or valves and/or AC (air conditioning) lines.

The compressor 100, the first refrigerant unit RU-1 and the second refrigerant unit RU-2 are directly fluidly connected together.

In other words, the refrigerant fluid directly flows between the first refrigerant unit RU-1, the second refrigerant unit RU-2 and the compressor 100.

In figures 5 and 6, the first refrigerant unit RU-1 is directly connected to the discharge port 105 of the compressor 100 and the second refrigerant unit RU-2 is directly connected to the suction port 104 such that the fluid flows directly from the second refrigerant unit RU-2 to the compressor 100 to the first refrigerant unit RU-1. It should be noted that the invention is not limited to this arrangement and the fluid can flow directly from the first refrigerant unit RU-1 to the compressor 100 to the second refrigerant unit RU-2.

The direct connection between the compressor 100 and the first refrigerant unit RU-1 ensures high compactness of the thermal management system, elimination of at least some of AC lines, reduction of the number of AC connectivity as well as a reduction of cost.

The first refrigerant unit RU-1 and the second refrigerant unit RU-2 are preferably directly connected together with at least one refrigerant interface port IP. This arrangement ensures that the fluid flows directly from the first refrigerant unit RU-1 to the second refrigerant unit RU-2 and/or from the second refrigerant unit RU-2 to the first refrigerant unit RU-1. This arrangement contributes also to the high compactness of the thermal management system.

As can be seen from figures 5 and 6, the hub 71 extend along a plane referred to as P1 while the refrigerant plate 2-2 and the back plate 3-2 extend longitudinally along planes that are parallel to a plane referred to as P2. P1 and P2 can respectively be defined as the first refrigerant unit (longitudinal) plane and second refrigerant unit (longitudinal) plane.

The planes P1 and P2 are inclined one to another with an angle referred to as A. This arrangement ensures high compactness of the refrigerant module 1. It also guarantees that the refrigerant module 1 can be adapted to different kinds of vehicle front ends, even for electric vehicles, where the thermal management systems should undergo many constraints relative to the packaging.

Advantageously, the angle A is comprised in the range of values of 45° to 110°, depending on the thermal management packaging. Preferably, the angle A is 90°, meaning that the planes P1 and P2 are perpendicular.

According to this embodiment, the first refrigerant unit RU-1 and the second refrigerant unit RU-2 are fixed, preferably with screws 61.

The third embodiment is now described with reference to figures 7 and 8.

According to this embodiment, the first refrigerant unit RU-1, the second refrigerant unit RU-2, the compressor 100 and their respective arrangement are the same as in the second embodiment, such that the description of these elements is not more detailed.

According to this embodiment, the refrigerant module 1 comprises at least one bracket 50, preferably provided with at least one decoupling element 51.

The decoupling element 51 ensures a vibrational decoupling of the thermal management system from the vehicle body. Hence, the propagation of acoustic waves and vibrations from the thermal management system to the cabin of the vehicle is reduced, which improves the comfort of the passengers.

The at least one bracket 50 ensures that the refrigerant module 1 can be considered as one piece. The refrigerant module 1 is configured such that the second refrigerant unit RU-2 and the at least one bracket 50 form a unit frame UF. In other words, the second refrigerant unit RU-2 and the at least one bracket 50 comprise fixations to connect components of the thermal management system. The refrigerant module 1 being a unit frame UF, the thermal management system can be handled as one piece, which is convenient for installing or uninstalling the thermal management system in the vehicle.

In the embodiment illustrated in figures 7 and 8, the refrigerant module 1 comprises two brackets, a first bracket 50-1 and a second bracket 50-2.

The first bracket 50-1 comprises a bracket body 52 extending along and exceeding a width of the back plate 3-2 of the second refrigerant unit RU-2 from a first end 53 to a second end 54. The bracket body 52 is close to edges W of the first plate 2-2 and the back plate 3-2 of the second refrigerant unit RU-2.

The first end 53 is folded perpendicularly relatively to the bracket body 52. The first end 53 is shaped to receive the free end 106 of the compressor 100. The second end 54 comprises two legs 55, each leg comprising a ring supporting one decoupling element 51. The decoupling elements can be of any suitable kind (foam, rubber, ...).

In figure 7, the second bracket 50-2 comprises a bracket body 52 with a part 57 parallel to edges W' of the first plate 2-2 and the back plate 3-2 of the second refrigerant unit RU-2. The part 57 rests on the back plate 3-2. The bracket body 52 of the second bracket 50-2 also comprises a supporting part 58 that is shaped to receive the second end 107 and its legs 108 as well as the parallelepiped part 102 of the compressor 100. An intermediary part 59 of the second bracket 50-2 maintains the parallelepiped part.

In figure 8, the second bracket 50-2 is an extension of the end 53 along all the length of the compressor 100.

The second refrigerant unit RU-2 and each bracket 50 are connected, either by a fixed connection (with screws 60 for instance as shown in figure 7) or by a permanent joint (by brazing).

Thanks to the fixed connection, the second refrigerant unit RU-2 and the brackets can be made of different materials. For instance, the second refrigerant unit RU-2 can be made of aluminum while the brackets 50-1, 50-2 can be made of plastic.

Thanks to the permanent joint, the refrigerant module 1 comprises a brazed joint around each of the brackets 50-1, 50-2. According to this alternative, the second refrigerant unit RU-2 and the brackets 50-1, 50-2 are preferably made of aluminum, which allows a simple method of manufacturing with the brazing in one step.

The number of brackets, their position and shape depend on the number of components of the thermal management system. As already noted, the arrangement of the refrigerant unit(s) with the bracket(s) extends the refrigerant units to a complete unit frame with decoupling function that isolates the module 1 from the vehicle body. All the AC components of the module 1 will be fixed to this "unified body". The module 1 has a high compactness and high stiffness and can be adapted for its integration to different kinds of vehicles. Also, preferably, the full module is decoupled, which reduces vibrations for the passengers of the vehicle. The module 1 furthermore allows minimization of material consumption by adding the refrigerant plate as a part of the unit frame.

The compressor 100 is preferably fixed to each of the refrigerant units. As shown in the figures, screws 62 ensure the fixation of the compressor 100 to the first refrigerant unit RU-1. In the third embodiment, the compressor is preferably screwed to the brackets.

As set out in this description, the refrigerant module 1 as per each of the embodiments guarantees a high optimization of space as well as a simple installation of the module in the vehicle, the module being handled as one piece.

## Claims

1. Refrigerant module for a thermal management system, comprising a refrigerant unit, called first refrigerant unit (RU-1) comprising channels for distributing a refrigerant fluid in said thermal management system, the refrigerant module (1) comprising a compressor (100) provided with a suction port (104) and a discharge port (105), wherein the compressor (100) and the first refrigerant unit (RU-1) are directly fluidly connected.

2. Refrigerant module according to claim 1, wherein the first refrigerant unit is directly connected to the discharge port (105) of the compressor (100).

3. Refrigerant module according to claim 1, wherein the first refrigerant unit (RU-1) is directly connected to the suction port (104) of the compressor (100).

4. Refrigerant module according to any of the preceding claims, wherein the compressor (100) is fixed to the first refrigerant unit (RU-1).

5. Refrigerant module according to claim 1, comprising another refrigerant unit (RU-2), called second refrigerant unit, comprising channels (4-2) for distributing the refrigerant fluid in said thermal management system, the first refrigerant unit (RU-1) and the second refrigerant unit (RU-2) being fixed together, wherein the compressor (100) and the second refrigerant unit (RU-2) are directly fluidly connected.

6. Refrigerant module according to claim 5, wherein the first refrigerant unit (RU-1) is directly connected to the discharge port (105) and the second refrigerant unit (RU-2) is directly connected to the suction port (104).

7. Refrigerant module according to claim 5 or 6, wherein the first refrigerant unit (RU-1) and the second refrigerant unit (RU-2) are directly fluidly connected to each other.

8. Refrigerant module according to any claims 5 to 7, wherein the second refrigerant unit (RU-2) is inclined relatively to the first refrigerant unit (RU-1), the angle (A) between the first refrigerant unit (RU-1) and the second refrigerant unit (RU-2) being comprised in a range of values of 45° to 110°.

9. Refrigerant module according to claim 8, wherein the first refrigerant unit (RU-1) is perpendicular to the second refrigerant unit (RU-2).

10. Refrigerant module according to any of claims 5-9, wherein the compressor (100) is fixed to both the first refrigerant unit (RU-1) and the second refrigerant unit (RU-2).

11. Refrigerant module according to any of claims 5-10, wherein the second refrigerant unit (RU-2) comprises at least one bracket (50-1, 50-2) to receive the compressor.

12. Refrigerant module according to claim 11, wherein said at least one bracket comprises a decoupling element (51).

13. Refrigerant module according to claim 11 or claim 12, comprising two brackets.

14. Refrigerant module according to any of the preceding claims 11 to 13, wherein the second refrigerant unit (RU-1) and each bracket (50-1, 50-2) are screwed or brazed together.

15. Thermal management system, comprising a refrigerant module (1) according to any of the preceding claims.
